# EUROPÄISCHE PATENTSCHRIFT

(11) **EP 0 471 678 B1**
(45) Veröffentlichungstag und Bekanntmachung des Hinweises auf die Patenterteilung: **22.06.1994**
(21) Anmeldenummer: 90905432.2
(22) Anmeldetag: 04.04.1990
(51) Int. Cl.: H02B 13/035, H01H 31/00

(54) **LASTSCHALTANLAGE MIT EINEM DREISTELLUNGSSCHALTER**
LOAD SWITCHING DEVICE WITH A THREE-POSITION SWITCH
INTERRUPTEUR AVEC UN COMMUTATEUR A TROIS POSITIONS

(30) Priorität: 12.05.1989 DE 3915948
(43) Veröffentlichungstag der Anmeldung: 26.02.1992
(73) Patentinhaber: SIEMENS AKTIENGESELLSCHAFT, 80333 München (DE)
(72) Erfinder: SPÄCK, Helmut, D-6050 Offenbach (DE); TISCHER, Erich, D-8520 Erlangen (DE)
(86) Internationale Anmeldenummer: DE9000273
(87) Internationale Veröffentlichungsnummer: WO9013932

(56) Entgegenhaltungen:
- EP-A- 0 199 044
- GB-A- 2 143 089
- Siemens Power Engineering vol. 5, No. 3, May 1983, Passau, Deutschland pages 131-134; R. Buchenau et al.: "New 8DJ10 Medium-Voltage Load-Break Switchgear for 5 to 24 kV, Maintenance-Free and Climate-Proof" see the whole document

## Beschreibung

Die Erfindung betrifft eine metallgekapselte und gasisolierte Lastschaltanlage mit einem an einen einspeisenden Leiter angeschlossenen Dreistellungsschalter für die Schaltstellungen "Ein", "Aus" und "Geerdet", sowie mit einem in Reihe mit dem Dreistellungsschalter in dessen Schaltstellung "Ein" geschalteten Vakuum-Leistungsschalter, der an einen abgehenden Leiter angeschlossen ist. Ein Beispiel einer solchen Lastschaltanlage ist in der DE-A-34 21 265 beschrieben, während Beispiele für Dreistellungsschalter aus den DE-A-29 30 830 und DE-A-35 29 617 zu entnehmen sind.

Lastschaltanlagen dieser Art können nicht nur die normalen Betriebsströme schalten, sondern auch zeitlich begrenzt Kurzschlußströme führen und unterbrechen. Deshalb werden die in Mittelspannungsnetzen gebräuchlichen HH-Sicherungen als Kurzschlußschutz nicht benötigt. Jedoch erfordert es die Reihenschaltung von Vakuum-Leistungsschalter und Dreistellungsschalter, Vorkehrungen dagegen zu treffen, daß der Dreistellungsschalter beim Bestehen eines hohen Überstromes oder Kurzschlußstromes ausgeschaltet werden kann, bevor dieser Strom durch den Leistungsschalter unterbrochen ist. Hierzu besitzt die Lastschaltanlage nach der DE-A-34 21 265 eine gemeinsame An triebsvorrichtung für beide Schaltgeräte, die eine zwangsläufige Schaltfolge sicherstellt.

Der Erfindung liegt die Aufgabe zugrunde, aufwendige Verriegelungen zwischen dem Vakuum-Leistungsschalter und dem Dreistellungsschalter zu vermeiden und hierdurch den inneren Aufbau der Schaltanlage bei wenigstens gleicher Sicherheit wesentlich zu vereinfachen.

Diese Aufgabe wird gemäß der Erfindung dadurch gelöst, daß der Dreistellungsschalter als Lasttrenn- und Erdungsschalter mit der Fähigkeit der Einschaltung auf einen Kurzschluß ausgebildet ist und daß der Erdungskontakt des Dreistellungsschalters unmittelbar mit dem abgehenden Leiter verbunden ist. Der SF₆-Dreistellungsschalter übernimmt hauptsächlich die Funktionen Trennen und Erden (einschaltfest), die Vakuum-Schaltröhren die Funktionen Lastströme und Kurzschlußströme schalten.

Durch die gewählte spezielle Anordnung der Schaltgeräte kann auf aufwendige mechanische und elektrische Verriegelungen zwischen den beiden Schaltgeräten verzichtet werden. Dieser Vorteil beruht darauf, daß das Schaltvermögen der Vakuum-Schaltröhren nur für die Kurzschlußschaltung benötigt wird. Durch das Lastschaltvermögen und die Einschaltfestigkeit des Dreistellungsschalters kann dieser ohne jede Einschränkung in jeder Stellung des Vakuum-Leistungsschalters betätigt werden. Der Einsatz des Leistungsschalters mit Vakuum-Schaltröhren hat zudem den Vorteil der hohen zulässigen Schaltspielzahl von wenigstens 10 000 Schaltungen gegenüber geforderten 1000 Schaltspielen für einen Lasttrennschalter.

Für die Unterbringung der Bauelemente der Lastschaltanlage innerhalb der Metallkapselung empfiehlt sich folgende Anordnung: Unten beginnend werden nach oben aufeinanderfolgend Durchführungen für die abgehenden Leiter, die speisenden Sammelschienen, der Dreistellungsschalter und der Vakumm-Leistungsschalter angeordnet. Ferner erweist es sich als Günstig, die Unterbrechungseinheiten des Vakuum-Leistungsschalters und deren Antrieb in sinngemäß der gleichen Weise innerhalb und außerhalb der Metallkapselung anzuordnen, wie dies bei den Dreistellungsschaltern bekannt ist. Somit können innerhalb der Metallkapselung die Vakuumschaltröhren mit einer isolierenden Traganordnung und außerhalb der Metallkapselung eine Antriebseinheit angeordnet sein, die mit den Vakuumschaltröhren durch ein in der Wandung der Metallkapselung geführtes Kupplungsteil verbunden ist und für den Dreistellungsschalter kann eine gleichfalls außerhalb der Metallkapselung angebrachte unabhängige Antriebseinheit vorgesehen sein.

Die vorstehend beschriebene Anordnung kann in vorteilhafter Weise ohne wesentliche Änderungen der Stromschienenanordnung im Inneren der Metallkapselung in der Weise abgewandelt werden, daß der für die Vakuumschaltröhren vorgesehene Raum ausreichend auch für die wahlweise Anordnung von Sicherungskammern für HH-Sicherungseinsätze bemessen ist.

Die Erfindung wird im folgenden anhand der in den Figuren dargestellten Ausführungsbeispiele näher erläutert.

Die Figur 1 zeigt das Schaltbild einer Lastschaltanlage mit einem Vakuum-Leistungsschalter.

Die Figur 2 zeigt schematisch die Geräteanordnung einer Lastschaltanlage gemäß der Figur 1.

In der Figur 3 ist eine Ausführungsform der Lastschaltanlage gemäß der Figur 2 gezeigt, bei welcher der Vakuum-Leistungsschalter durch HH-Sicherungen ersetzt ist.

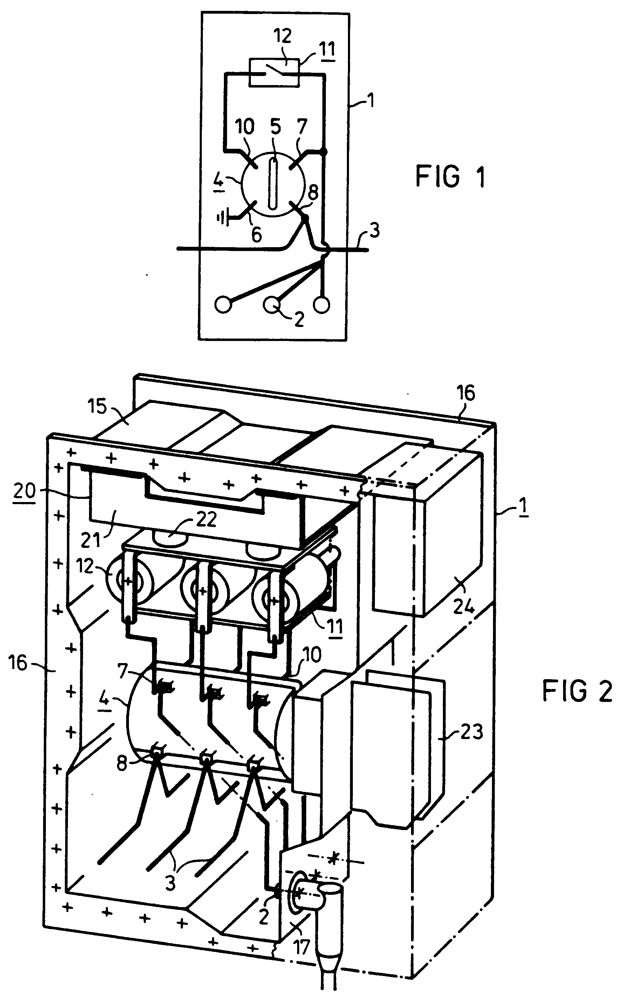

In dem Schaltbild gemäß der Figur 1 entspricht die Anordnung der Schaltungselemente der vorgesehenen räumlichen Anordnung innerhalb eines als Rechteck dargestellten Behälters 1. An der tiefsten Stelle befinden sich die Durchführungen für abgehende Leiter bzw. Kabel. Quer hierzu verläuft oberhalb der Durchführungen 2 eine Sammelschienenanordnung 3, deren einzelne Phasenleiter in der Bildebene hintereinander liegen, so daß in der Figur 1 nur die vorderste der Sammelschienen 3 erkennbar ist.

Oberhalb der Sammelschienen 3 befindet sich ein Dreistellungsschalter 4, der ein drehbares Brückenschaltstück 5 sowie zwei Paare einander diagonal gegenüberstehender feststehender Schaltstücke 6, 7 sowie 8, 10 aufweist. Für jede Phase ist die dargestellte Kontaktanordnung vorgesehen. Diese liegen gleichfalls in der Bildebene hintereinander, so daß nur die vorderste Kontaktanordnung sichtbar ist.

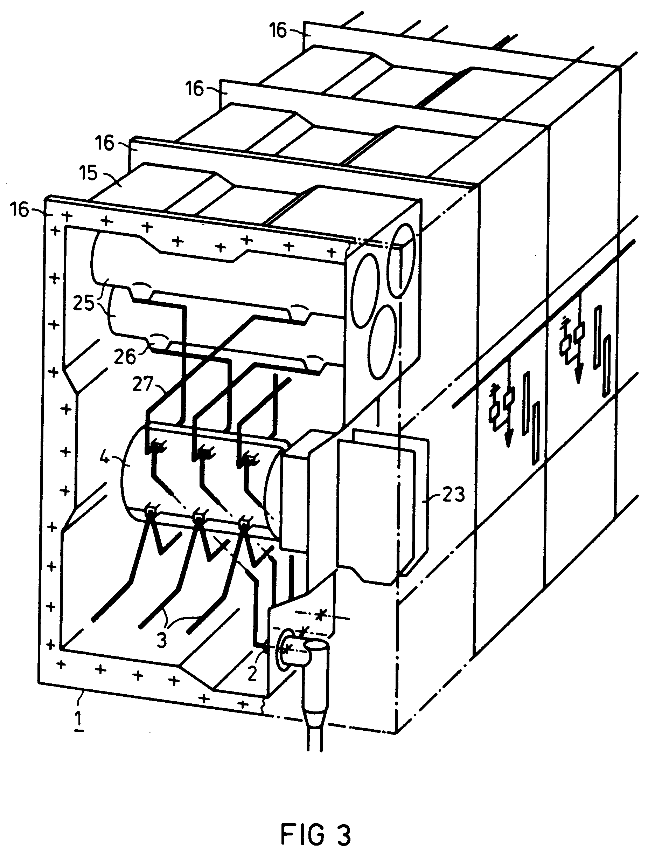

In dem Raum oberhalb des Dreistellungsschalters 4 befindet sich in dem Behälter 1 ein Vakuum-Leistungsschalter 11, von dem nur die vorderste der wiederum in der Bildebene hintereinander angeordneten Schaltröhren 12 sichtbar ist. Die Antriebsvorrichtung des Leistungsschalters 11 ist zur Vereinfachung in der Figur 1 fortgelassen. Ihre Anordnung wird noch anhand der Figur 2 erläutert.

In der Figur 1 ist das bewegbare Brückenschaltstück 5 des Dreistellungsschalters 4 in der Ausschaltstellung gezeigt, in welcher das Brückenschaltstück 5 mit keinem der feststehenden Schaltstücke in Berührung steht. Wird ausgehend von dieser Stellung das Brückenschaltstück 5 entgegen dem Uhrzeigersinn soweit gedreht, daß die feststehenden Schaltstücke 8 und 10 miteinander verbunden werden, so wird der Vakuum-Leistungsschalter 11 mit der Sammelschienenanordnung 3 verbunden. Die Speisung der an die Durchführungen 2 angeschlossenen Kabel bzw. Verbraucher erfolgt dann unmittelbar, wenn die Schaltröhren 12 bei der Betätigung des Dreistellungsschalters 4 bereits eingeschaltet waren oder, ausgehend von der in der Figur 1 dargestellten Situation, wenn anschließend an die Betätigung des Dreistellungsschalters 4 auch die Schaltröhren 12 eingeschaltet werden. Beide Arten der Betätigung sind zulässig, weil der Dreistellungsschalter 4 einer bekannten einschaltfesten Bauart angehört. Dies bedeutet, daß der Dreistellungsschalter 4 auch auf einen bestehenden Kurschluß eingeschaltet werden darf. Sollte dieser Fall vorliegen, so sprechen unmittelbar die Schutzorgane des Leistungsschalters 11 an und unterbrechen den Kurzschlußstrom. Die gleiche Schutzwirkung übt der Leistungsschalter 11 aus, wenn bei eingeschaltetem Dreistellungsschalter 4 zu einem beliebigen Zeitpunkt ein Kurzschluß oder eine andere unzulässige Überlastung auftritt.

Die Erdung der Abgangsseite, d. h. der an die Durchführungen 2 angeschlossenen Kabel oder Verbraucher, geschieht unmittelbar durch Drehung des Dreistellungsschalters 4 im Uhrzeigersinn soweit, daß die feststehenden Schaltstücke 6 und 7 durch das Brückenschaltstück 5 verbunden werden. Einzelheiten der Erdverbindung sind in der Figur 1 zur Vereinfachung fortgelassen. Es ist lediglich durch ein Erdungszeichen an dem feststehenden Schaltstück 6 auf die bestehende Erdverbindung hingewiesen. Wie man erkennt, werden durch die Schalthandlung sowohl die Durchführungen 2 als auch die abgangsseitigen Anschlüsse des Leistungsschalters 11 geerdet. Zugleich ist der Leistungsschalters 11 von der Einspeisung getrennt, so daß zur Probe Schaltungen ohne die Gefahr von Schaltfehlern vorgenommen werden können.

Eine Lastschaltanlage mit dem Aufbau gemäß der Figur 1 ist in der Figur 2 schematisch perspektivisch dargestellt. Für übereinstimmende Bauteile sind dabei die gleichen Bezugszeichen wie in der Figur 1 vorgesehen. Der Behälter 1 weist ein mehrfach abgewinkeltes Mantelblech 15 auf, das beidseitig mit Flanschen 16 versehen ist. Auf diese Weise können mehrere gleiche Behälter 1 zusammengefügt und ein abschließender Behälter 1 mit einem Verschlußdeckel versehen werden. Die Verbindung benachbarter Behälter kann dabei unter Zwischenlage von Dichtungsmaterial durch Schrauben erfolgen oder die Behälter können durch eine über den gesamten Umfang verlaufende Schweißnaht dauerhaft dicht verbunden werden.

Wie die Figur 2 zeigt, sind die abgangsseitigen Durchführungen 2 an der Frontwand 17 des Behälters 1 angeordnet, an der sich auch die noch zu erläuternden Bedienungselemente des Dreistellungsschalters 4 und des Vakuum-Leistungsschalters 11 befinden. An der dem Betrachter zugewandten Seite des Dreistellungsschalters 4 sind die äußeren Anschlußteile der feststehenden Schaltstücke 7 und 8 erkennbar. Zur Vereinfachung sind hierfür gleichfalls die Bezugszeichen 7 und 8 eingetragen. Gleichfalls erkennbar sind die Anschlußteile der feststehenden Schaltstücke 10, während die Erdungsschaltstücke 6 verdeckt sind. Die Schaltröhren 12 sind in einer als Ganzes mit 20 bezeichneten Traganordnung befestigt, die einen Sockel 21 sowie Isolierstützer 22 umfaßt. Dadurch, daß die Schaltröhren 12 mit ihrer Längsachse quer zur Längsachse des Dreistellungsschalters 4 angeordnet sind, sind die Verbindungen zwischen den Schaltstücken 7 und 10 des Dreistellungsschalters 4 und den an beiden Enden der Schaltröhren 12 befindlichen Anschlußstellen mit nur kurzen Schienenstücken einfach herstellbar.

An der Frontseite 17 des Behälters 1 befindet sich oberhalb der Durchführungen 2 eine Antriebseinheit 23 für den Dreistellungsschalter 4. Oberhalb dieser und bis etwa zur Oberkante des Mantelbleches 15 reichend ist eine weitere Antriebsvorrichtung 24 für den Vakuum-Leistungsschalter 11 angeordnet. Alle Bedienungselemente des dargestellten Feldes einer Lastschaltanlage sind somit an der Stirnseite der Feldeinheiten zugänglich.

Der oberhalb des Dreistellungsschalters 4 in dem Behälter 1 gemäß der Figur 2 verbleibende Raum ist so bemessen, daß wahlweise anstelle des Vakuum-Leistungsschalters 11 auch Sicherungskammern für HH-Sicherungseinsätze eingebaut werden können. Diese Anordnung zeigt die Figur 3. In diesem Beispiel sind drei Sicherungskammern 25 im Dreieck so angeordnet, daß ihre Längsachsen parallel zur Längsachse des Dreistellungsschalters 4 verlaufen. Jede der Sicherungskammern 25 besitzt Durchführungen 26 zum Anschluß von Leiterschienen 27, durch die in sinngemäß der gleichen Weise wie die Schaltröhren 12 in der Figur 2 in den Sicherungskammern 25 unterzubringende HH-Sicherungseinsätze mit den Anschlußklemmen 7 und 10 des Dreistellungsschalters 4 zu verbinden sind. Die HH-Sicherungseinsätze sind nicht gesondert dargestellt. Sie können der üblichen genormten Bauart entsprechen. Dadurch, daß die Sicherungskammern 25 in dem Behälter 1 untergebracht sind, ist an der Außenseite der Sicherungskammern, d. h. im Bereich der Anschlußdurchführungen 26, das hohe Isoliervermögen des zur Füllung des Gehäuses 1 vorgesehenen Isoliergases, insbesondere SF₆, wirksam. Der Innenraum der Sicherungskammern 25 steht dagegen mit der umgebenden Atmosphäre in Verbindung, so daß die Sicherungseinsätze unabhängig von der Gasatmosphäre in dem Behälter 1 ausgewechselt werden können.

Die Figur 3 läßt noch erkennen, wie mehrere Behälter 1 zu einer mehrfeldrigen Lastschaltanlage zusammengefügt werden können. Aufgrund der übereinstimmenden Abmessungen können dabei Felder mit einem Aufbau gemäß der Figur 2 und einem Aufbau gemäß der Figur 3 wahlweise kombiniert werden. Hiermit wird eine weitgehende Anpassung an die in der Praxis vorkommenden Schaltaufgaben erzielt.

## Patentansprüche

1. Metallgekapselte und gasisolierte Lastschaltanlage mit einem an einen einspeisenden Leiter (Sammelschiene 3) angeschlossenen Dreistellunggschalter (4) für die Schaltstellungen "Ein", "Aus" und "Geerdet", sowie mit einem in Reihe mit dem Dreistellungsschalter (4) in dessen Schaltstellung "Ein" geschalteten Vakuum-Leistungsschalter (11), der an einen abgehenden Leiter (2) angeschlossn ist, **dadurch gekennzeichnet,** daß der Dreistellungsschalter (4) als Lasttrenn- und Erdungsschalter mit der Fähigkeit der Einschaltung auf einen Kurzschluß ausgebildet ist und daß der Erdungskontakt des Dreistellungsschalters (4) unmittelbar mit dem abgehenden Leiter (2) verbunden ist.

2. Lastschaltanlage nach Anspruch 1, **dadurch gekennzeichnet,** daß innerhalb der Metallkapselung (1) die folgenden Bauelemente unten beginnend und nach oben aufeinanderfolgend angeordnet sind:
Durchführungen (2) für abgehende Leiter, speisende Sammelschienen (3), Dreistellungsschalter (4) und Vakuum-Leistungsschalter (11).

3. Lastschaltanlage nach Anspruch 1 oder 2, **dadurch gekennzeichnet,** daß innerhalb der Metallkapselung (1) die Vakuumschaltröhren (12) des Leistungsschalters (11) mit einer isolierenden Traganordnung (22) und außerhalb der Metallkapselung (1) eine Antriebseinheit (24) angeordnet ist, die mit den Vakuumschaltröhren (12) durch ein gasdicht in der Wandung (15) der Metallkapselung (1) geführtes Kupplungsteil verbunden ist und daß für den Dreistellungsschalter (4) eine gleichfalls außerhalb der Metallkapselung (1) angebrachte unabhängige Antriebseinheit (23) vorgesehen ist.

4. Lastschaltanlage nach Anspruch 3, **dadurch** **gekennzeichnet,** daß der für die Vakuumschaltröhren (12) vorgesehene Raum ausreichend auch für die wahlweise Anordnung von Sicherungskammern (25) für HH-Sicherungseinsätze bemessen ist.

## Claims

1. Metal-clad and gas-insulated load-break switchgear having a three-position disconnecter (4) connected to a supply conductor (busbar 3) for the "on", "off" and "earthed" positions, and having a vacuum circuit-breaker (11) connected in series to the three-position disconnecter (4) in the "on" position thereof and connected to an outgoing conductor (2), characterised in that the three-position disconnecter (4) is constructed as a load-break and earthing switch which can be connected to a short circuit, and in that the earthing contact of the three-position disconnecter (4) is directly connected to the outgoing conductor (2).

2. Load-break switchgear according to claim 1, characterised in that, inside the metal enclosure (1), the following components are arranged successively in the upward direction, starting at the base:
bushings (2) for outgoing conductors, supply busbars (3), three-position disconnecters (4) and vacuum circuit-breakers (11).

3. Load-break switchgear according to claim 1 or 2, characterised in that the vacuum interrupters (12) of the circuit-breaker (11) are arranged with an insulating support arrangement (22) inside the metal enclosure (1) and, outside the metal enclosure (1), there is arranged a drive unit (24) which is connected to the vacuum interrupters (12) by a coupling part supported in a gas-tight manner in the wall (15) of the metal enclosure (1), and in that, for the three-position disconnecter (4), there is provided an independent drive unit (23) also attached outside the metal enclosure (1).

4. Load-break switchgear according to claim 3, characterised in that the space provided for the vacuum interrupters (12) is also of a sufficient size for the selective arrangement of fuse boxes (25) for high-voltage high-breaking-capacity fuses.

## Revendications

1. Interrupteur de puissance étanche aux gaz et sous blindage métallique, comportant un interrupteur (4) à trois positions raccordé à un conducteur d'alimentation (barre collectrice 3) pour les positions de commutation "marche", "arrêt" et "à la terre", ainsi qu'un interrupteur de puissance sous vide (11) branché en série avec l'interrupteur à trois positions (4) lorsque celui-ci est dans la position de commutation "marche", qui est raccordé à un conducteur de sortie (2), caractérisé en ce que l'interrupteur (4) à trois positions a une conformation de sectionneur de coupure en charge et de commutateur de mise à la terre, avec capacité de mise en circuit sur un court-circuit et que le contact de mise à la terre de l'interrupteur (4) à trois positions est directement relié au conducteur (2) de sortie.

2. Interrupteur de puissance selon la revendication 1, caractérisé en ce qu'à l'intérieur du blindage métallique (1) les éléments suivants sont disposés successivement de bas en haut :
passages (2) pour conducteurs de sortie, barres collectrices (3) d'alimentation, interrupteur (4) à trois positions et interrupteur de puissance sous vide (11).

3. Interrupteur de puissance selon la revendication 1 ou 2, caractérisé en ce qu'à l'intérieur du blindage métallique (1) sont placés les tubes commutateurs sous vide (12) de l'interrupteur de puissance (11), au moyen d'un dispositif de support isolant (22) et qu'à l'extérieur du blindage métallique (1) est placé un dispositif d'entraînement (24) qui est relié aux tubes commutateurs sous vide (12) par l'intermédiaire d'une pièce d'accouplement traversant la paroi (15) du blindage métallique (1) par un passage étanche aux gaz et qu'il est prévu pour l'interrupteur (4) à trois positions un dispositif d'entraînement (23) indépendant également monté à l'extérieur du blindage métallique (1).

4. Interrupteur de puissance selon la revendication 3, caractérisé en ce que l'espace prévu pour les tubes commutateurs sous vide (12) a une dimension suffisante pour prévoir éventuellement des logements (25) pour fusibles destinés à des cartouches de fusibles HH.
